# EUROPEAN PATENT SPECIFICATION

(11) **EP 3 238 928 B1**
(45) Date of publication and mention of the grant of the patent: **01.07.2020**
(21) Application number: 16167560.8
(22) Date of filing: 28.04.2016
(51) Int. Cl.: B29D 30/72, B23K 26/00

(54) **SYNCHRONIZATION OF INFORMATION ON A TIRE**
SYNCHRONISATION VON INFORMATIONEN AUF EINEM REIFEN
SYNCHRONISATION D'INFORMATIONS SUR UN PNEU

(43) Date of publication of application: 01.11.2017
(73) Proprietor: 4JET Technologies GmbH, 52477 Alsdorf (DE)
(72) Inventor: KRAUS, Armin, 52134 Herzogenrath (DE)
(74) Representative: Dilg, Haeusler, Schindelmann Patentanwaltsgesellschaft mbH

(56) References cited:
- EP-A1- 2 977 934
- EP-A2- 0 845 374
- WO-A1-2005/000714
- DE-A1-102010 016 069
- US-A- 4 041 652
- US-A1- 2016 098 581
- Klaus Peter Backfisch: "Das grosse Reifenbuch", 31 December 2006 (2006-12-31), HEEL Verlag GmbH, 53639 Königswinter, XP002762458, ISBN: 978-3-89880-656-5 * pages 137,188 *

## Description

### FIELD OF INVENTION

The present invention relates to the field of providing information to tires.

### BACKGROUND

WO 2005/000714 A1 relates to vehicle tires and a system enabling data to be applied to the exterior surface of the inboard or outboard sidewalls of a tire by laser engraving, avoiding or reducing the placement of engraving strips in the mold and in which data can be applied after the tire has been molded such as the week and year the tire is molded as required by the DOT. The system has several workstations, one of which detects the location of existing DOT data characters which had been molded into the tire and/or a barcode strip previously placed on the tire when it is in its green state, and uses this location for positioning the tire and/or a laser so that subsequent applied data is correctly positioned adjacent the existing molded data. The system for marking of tires includes a first station, a second station, and a third station. The first station contains a barcode reader for reading indicia contained on a usual barcode strip which has been attached to the tire. The location of the barcode can be used for the subsequent laser engraving of information on the tire. In the second station a vision camera system will read the human visible printed indicia or characters which have been molded into the tire. A laser applicator or engraver is adjustably mounted at the third station by an adjustment mechanism which enables the laser applicator or engraver to be moved in the X, Y, and Z planes so that the laser beam can be properly positioned in the XY direction. Adjustment in the Z direction will adjust for the focal length of the laser beam. The same laser applicator used for applying the last four characters of the required DOT code (week and year in which the tire is molded) can be used for encoding a 2-D symbol, e.g. a data matrix, which may include a serial number for the tire.

DE 10 2010 016069 A1 discloses an air tire of a vehicle with a side wall comprising design elements which may be characters, numbers or the like and which consists of a reflecting material.

EP 0 845 374 A2 discloses a method of marking a tire to indicate a taper vector direction in the plane of the first harmonic highpoint.

XP002762458 discloses a tire comprising on two opposing locations of the same side wall the term "BF Goodrich".

EP 2977934 A1 describes digital coating of rubber articles.

US 2016/0098581 A1 relates to a method and system for tracking and authenticating articles for use in law enforcement or other official capacity.

US 4041652 discloses a portable apparatus which can be used by local tire distributors to customize a tire by forming in the side wall of the tire personalized indicia requested by the owner of the tire.

### SUMMARY

Known tires provide a plurality of information usually in form of a marking on the tire surface. A marking provides an optical contrast, e.g. a light/dark contrast or a color contrast. However, in many instances such information provided on a tire is difficult to read from the tire especially, but not only, by automated systems.

Already human reading of such tire information proves to be difficult and error prone. Hence, considerable effort is required to obtain such information during the handling of the tire throughout the various handling processes of a tire live, from the tire manufacturer over distributors and motor vehicle manufacturers to garages which mount or change tires and to finally consumers actually using the tire.

In view of the above-described situation, there exists a need for an improved technique that enables to provide for an efficient use of information that is provided by a tire, while substantially avoiding or at least reducing one or more of the above-identified problems.

This need may be met by the subject matter according to the independent claims. Advantageous embodiments of the herein disclosed subject matter are described by the dependent claims.

According to claim 1 (first aspect) there is provided a method of providing a tire with different representations of a piece of information. According to claim 1, the method comprises: synchronizing a first representation of the piece of information and a second representation of the piece of information such that the first representation and the second representation represent the same piece of information.

According to claim 7 (second aspect) there is provided a tire. The tire comprises a first representation of a piece of information; and a second representation of the (same) piece of information.

According to claim 10 (third aspect) there is provided a tire marking device. The tire marking device is configured for carrying out the method according claim 1 or an embodiment thereof.

According to claim 11 (fourth aspect) there is provided a controller of a tire marking device. The controller is configured for carrying out the method according claim 1 or an embodiment thereof.

According to claim 12 (fifth aspect) there is provided a computer program product. The computer program product comprises a program element which is configured for, when executed on a processor device, carrying out the method according to claim 1 or an embodiment thereof.

In the following, further exemplary embodiments of the herein disclosed subject matter are described, any number and any combination of which may be realized in an implementation of aspects of the herein disclosed subject matter.

The aspects and embodiments defined above and further aspects and embodiments of the herein disclosed subject matter are apparent from the examples to be described hereinafter and are explained with reference to the drawings, but to which the invention is not limited. The aforementioned definitions and comments are in particular also valid for the following detailed description and vice versa.

### BRIEF DESCRIPTION OF THE DRAWINGS

Fig. 1 shows a tire marking device according to embodiments of the herein disclosed subject matter.
Fig. 2 shows a further tire marking device according to embodiments of the herein disclosed subject matter.
Fig. 3 shows a tire according to embodiments of the herein disclosed subject matter.

### DETAILED DESCRIPTION

According claim 1 there is provided a method of providing a tire with different representations of a piece of information the method comprising: synchronizing a first representation of the piece of information and a second representation of the piece of information such that the first representation and the second representation represent the same piece of information.

Herein, according to an embodiment the term "synchronizing" has the following meaning: Synchronizing two representations of the same piece of information means adapting the content of at least one of the representations to the other one such that they include and are capable of providing the same piece of information. In other words, according to an embodiment the term synchronizing means synchronizing in content.

According to an embodiment, the tire already includes the second representation and synchronizing the first representation with the second representation includes: reading the piece of information from the second representation; encoding the piece of information read from the second representation to thereby generate the first representation; transferring the first representation to the tire.

According to an embodiment, the second representation which is read from the tire is a human readable representation of the piece of information e.g. a sequence of at least one human readable item. A human readable item may be e.g. a character, a number, or a picture element (such as a logo). According to a further embodiment, synchronizing the first representation with the second representation includes: receiving the piece of information; generating the first representation from the received piece of information; generating the second representation from the received piece of information; transferring the first representation and the second representation to the tire. According to an embodiment, transferring the second representation to the tire includes generating the second representation in a surface of the tire, e.g. by laser treatment of the surface of the tire. According to a further embodiment, transferring the first representation to the tire includes generating the first representation in a surface of the tire, e.g. by laser treatment of the surface of the tire.

According to an embodiment, transferring a representation (e.g. the first representation or the second representation) to the tire includes generating the representation in a surface of the tire by machining the tire, e.g. by an mechanical engraver or other tool, or by applying a paint or by otherwise selectively changing the color of the tire surface.

According to claim 1, the first representation is at least part of an optically readable digital code pattern; and according to claim 1 transferring the first representation to the tire includes generating the optically readable digital code pattern in a surface of the tire. According to an embodiment, the optically readable digital code pattern is a QR code or a DMC (DataMatrix Code) which is readable by conventional reader devices, e.g. reader devices used in industry or even smart phones.

According to claim 1, generating the digital code pattern in the surface of the tire includes generating the digital code pattern by laser treatment of the surface of the tire.

According to a further embodiment, the tire includes an electronic memory; and transferring the first representation to the tire includes storing the first representation in the electronic memory. According to an embodiment, storing the first representation in the electronic memory includes transferring the first representation to the electronic memory by a wireless communication method, such as, for example, Bluetooth, near field communication (NFC), etc. The electronic memory may be any suitable storage device for storing electronic data, such as an electronic memory of a radiofrequency identification (RFID) device.

According to a further embodiment, the second representation is at least one of the following: a non-digital representation of the piece of information; an optically readable representation of the piece of information; a machine readable representation of the piece of information; a human readable representation of the piece of information; data stored in an electronic storage element. The electronic storage element may be any suitable storage device for storing electronic data, such as an electronic memory of a radiofrequency identification (RFID) device. According to an embodiment, communication with the electronic storage element is performed by a wireless communication method, such as, for example, Bluetooth, near field communication (NFC), etc.

According to an embodiment, the piece of information is at least part of a DOT code (Department Of Transportation code) of the tire, e.g. an entire DOT code, a part of a DOT code, or in particular a part of the DOT code that provides a week of manufacture of the tire (DOT week code). According to a further embodiment, the piece of information is one or more of the following: load index, speed index, OEM specific marking, marking indicating special noise or runflat capability, approval or registration code like an ECE code.

According to an embodiment, the first representation is a digital representation of the piece of information and the second representation is a further representation of the piece of information.

According to a further embodiment, the first representation is different from the second representation.

According to claim 7 there is provided a tire, the tire comprising a first representation of a piece of information; and a second representation of the piece of information.

The first representation is at least part of an optically readable digital code pattern generated after vulcanization of the tire, in particular by laser treatment of the tire.

According to a further embodiment, the second representation is an optically readable representation generated after vulcanization of the tire, in particular by laser treatment of the tire.

According to an embodiment, the first representation is at least part of an optically readable digital code pattern generated in a surface of the tire. According to an embodiment, the first representation and/or the second representation is a laser marking of the tire.

According to an embodiment, at least one (i.e. only a single one or both) of the first representation and the second representation is an optically readable representation of the piece of information.

According to a further embodiment, one of the first representation and the second representation is a laser marking and the other of the first representation and the second representation is a molded marking. For example, according to an embodiment, the first representation is a laser marking and the second representation is a molded marking. According to an embodiment, a molded marking is generated during molding (vulcanizing) of the tire, e.g. by a surface structure provided in an inner surface of the mold in which the tire is vulcanized (cured). According to an embodiment, the surface structure is provided by an inlay that is positioned in the mold. According to an embodiment, a laser marking is generated by means of a laser beam which is configured and positioned for selectively removing material (rubber material) of the tire to thereby generate the laser marking.

According to an embodiment, each of the first representation and the second representation is a laser marking.

According to an embodiment, the first representation is contained in a storage device included in the tire, e.g. in the storage device of an RFID tag that may e.g. be located on a surface of the tire or within the tire and that may e.g. be fully surrounded by rubber material of the tire.

According to a further embodiment, the first representation is contained in a storage device included in the tire (such as described above) and the second representation is a laser marking.

Generally, it is noted that according to embodiments of the herein disclosed subject matter any piece of information provided by the tire (e.g. in or on the tire) in the form of a particular representation (e.g. first or second representation) is read by the reader device and the same piece of information is written in a different representation (e.g. second or first representation) to the tire as an optically readable marking, e.g. as a laser marking.

According to a further embodiment, the piece of information provided by the tire is one or more of the following: load index, speed index, OEM specific marking, marking indicating special noise or runflat capability, approval or registration code like an ECE code.

According to an embodiment, the piece of information is at least part of a DOT code of the tire, in particular a part of the DOT code that provides a week of manufacture of the tire.

According to claim 10 there is provided a tire marking device, the tire marking device being configured for carrying out the method according to claim 1 or an embodiment thereof.

According to an embodiment, the tire marking device includes an input for receiving the piece of information; an encoder for encoding the received piece of information to thereby provide the first representation of the piece of information; and a writer device for transferring the first representation of the piece of information to the tire. According to an embodiment, the input of the tire marking device is the input of a controller of the tire marking device. According to an embodiment, the tire marking device may include a reader device for reading the second representation of the piece of information from the tire and provide, in response hereto, the piece of information. According to an embodiment, the reader device is a sheet of light sensor, e.g. a sheet of light sensor as described in DE 20 2005 002 355 U1. According to a further embodiment, the reader device is a camera. According to a further embodiment, the piece of information thus obtained by the reader device is provided to the input of the tire marking device.

According to a further embodiment, the tire marking device includes a further encoder for encoding the received piece of information to thereby provide the second representation of the piece of information.

According to claim 11 there is provided a controller of a tire marking device, the controller being configured for carrying out the method according to claim 1 or an embodiment thereof.

According to an embodiment, the controller is communicatively coupled with further entities of the tire marking device, e.g. with at least one of the input, the reader device and the writer device. According to an embodiment, one or more entities of the tire marking device, e.g. the encoder and the further encoder, are implemented by the controller.

According to a further embodiment, the controller includes a processor device configured for executing a program element which, when executed on the processor device, provides the functionality of the controller as described herein. According to an embodiment, the controller has a network interface and is capable of forming a network node of a communication network, e.g. of an local area network (LAN). According to an embodiment, the controller is a control device.

According to claim 12 there is provided a computer program product, the computer program product comprising a program element which is configured for, when executed on a processor device, carrying out the method according to claim 1 or an embodiment thereof.

As used herein, reference to a computer program product is intended to be equivalent to a reference to a program element and/or a computer readable medium containing instructions for controlling a processor device to effect and/or coordinate the performance of the described method.

The computer program may be implemented as computer readable instruction code by use of any suitable programming language, such as, for example, JAVA, C++, C#, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

Any suitable aspect or embodiment of the herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

According to further embodiments of claim 1, the method is adapted for providing the functionality of one or more of the herein disclosed embodiments and/or for providing the functionality as required by one or more of the herein disclosed embodiments, in particular of the embodiments of the independent claim 7,10,11 and 12.

According to further embodiments claim 7, the tire is adapted for providing the functionality of one or more of the herein disclosed embodiments and/or for providing the functionality or features as resulting from one or more of the herein disclosed embodiments, in particular of the embodiments of the independent claims 1,10,11 and 12.

According to further embodiments of the claim 10, the tire marking device is adapted for providing the functionality of one or more of the herein disclosed embodiments and/or for providing the functionality as required by one or more of the herein disclosed embodiments, in particular of the embodiments of the independent claims 1,7,11 and 12.

According to further embodiments of claim 11, the controller is adapted for providing the functionality of one or more of the herein disclosed embodiments and/or for providing the functionality as required by one or more of the herein disclosed embodiments, in particular of the embodiments of the independent claims 1,7,11 and 12.

According to further embodiments of claim 12, the computer program product is adapted for providing the functionality of one or more of the herein disclosed embodiments and/or for providing the functionality as required by one or more of the herein disclosed embodiments, in particular of the embodiments of the independent claims 1,7,10 and 11.

At least some of the aspects and embodiments disclosed herein are based on the idea that providing tires with information may be subject to the problem that different types of information are provided at different stages of the tire manufacturing. In particular if a piece of information is to be provided redundantly on a tire, and in particular if different representations of the same piece of information are to be provided on a tire, there may arise the problem that the piece of information is not readily available at different stages of tire manufacturing. Several aspects and embodiments disclosed herein may provide solutions to such general issues and moreover may provide further advantages as disclosed herein.

In the above there have been described and in the following there will be described exemplary embodiments of the subject matter disclosed herein with reference to a method, a tire, a tire marking device, a controller for a tire marking device and a computer program product. It has to be pointed out that of course any combination of features relating to different aspects of the herein disclosed subject matter is also possible. In particular, some features have been or will be described with reference to device type embodiments (relating to a tire, tire marking device or a controller of a tire marking device) whereas other features have been or will be described with reference to method type embodiments (relating to a method or a computer program product). However, a person skilled in the art will gather from the above and the following description that, unless other notified, in addition to any combination of features belonging to one aspect also any combination of features relating to different aspects or embodiments, for example even combinations of features of device type embodiments and features of the method type embodiments are considered to be disclosed with this application. In this regard, it should be understood that any method feature derivable from a corresponding explicitly disclosed device feature should be based on the respective function of the device feature and should not be considered as being limited to device specific elements disclosed in conjunction with the device feature. Further, it should be understood that any device feature derivable from a corresponding explicitly disclosed method feature can be realized based on the respective function described in the method with any suitable device disclosed herein or known in the art.

The illustration in the drawings is schematic. It is noted that in different figures, similar or identical elements are provided with the same reference signs or with reference signs which are different from the corresponding reference signs only within the first digit. Accordingly, the description of the similar or identical features is not repeated in the description of subsequent figures in order to avoid unnecessary repetitions. However, it should be understood that the description of these features in the preceding figures is also valid for the subsequent figures unless explicitly noted otherwise.

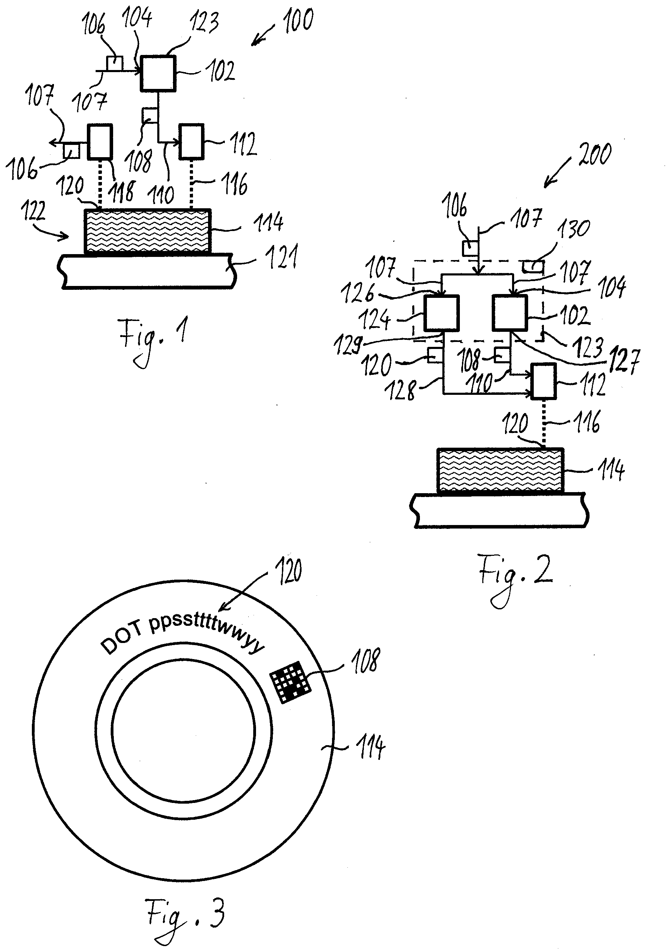

Fig. 1 shows a tire marking device 100 according to embodiments of the herein disclosed subject matter.

According to an embodiment, the tire marking device 100 is configured for synchronizing a first representation of the piece of information and a second representation of the piece of information such that the first representation and the second representation represent the same piece of information.

To this end and in accordance with an embodiment, the tire marking device includes an encoder 102 having an input 104 for receiving the piece of information 106. The piece of information 106 may be provided to the input 104 in any suitable form, e.g. as an electrical signal 107, such as an analog electrical signal or a digital electrical signal. In such a case, illustrated in Fig. 1 by the rectangular box on the electrical signal 107, the electrical signal 107 carries the piece of information 106.

In accordance with an embodiment, the encoder 102 is configured for receiving the piece of information 106 and provides, in response hereto, a first representation 108 of the piece of information 106. According to an embodiment, the first representation 108 is a QR code or any other 2D digital matrix code including (i.e. representing) the piece of information 106. According to an embodiment, the encoder 102 is communicatively coupled, e.g. by exchanging an electrical signal 110 in Fig. 1, with a writer device 112 of the tire marking device 100 to provide to the writer device 112 the first representation 108 of the piece of information 106. Generally, communicative coupling may be established by electrical signals (e.g. electrical signals transmitted over wires or wireless), optically, etc. Further, exchanging or providing an electrical signal as disclosed herein may be generally referred to as communicative coupling and may be generally replaced by any other means of communicative coupling.

According to an embodiment, the writer device 112 is a laser device for laser marking of a tire 114.

According to an embodiment, the writer device is configured for transferring the first representation 108 of the piece of information 106, e.g. the QR code, to the tire 114, e.g. by means of a laser beam, indicated at 116 in Fig. 1. Controlling a laser device in order to transfer a desired pattern (e.g. the first representation) to a tire is known in the art (e.g. in the patent applications cited herein) and is therefore not described in detail in this application.

According to an embodiment, the tire marking device 100 may include a reader device 118 (e.g. a sheet of light sensor, a camera, etc.) for reading a second representation 120 of the piece of information 106 from the tire 114 and provide, in response hereto, the piece of information 106, e.g. in the form of the electrical signal 107. According to a further embodiment, the piece of information 106 thus obtained by the reader device 118 is provided to the input 104 of the tire marking device or, more particularly as described with regard to Fig. 1, to the input 104 of the encoder 102.

According to an embodiment, the reader device 118 may include optical character recognition (OCR) capabilities, e.g. an OCR entity. According to a further embodiment, the reader device 118 may include picture comparison capabilities, e.g. a picture comparison entity. According to an embodiment, a picture comparison involves comparing a picture taken by the reader device 118 and a reference picture by any suitable method, e.g. contrast comparison, deep neural networks, etc. According to an embodiment, the reader device may generate a probability for a particular piece of information (e.g. DOT week code). According to a further embodiment, determining the piece of information 106 from two or more possible pieces of information may include selecting the piece of information 106 from the two or more possible pieces of information by taking into account a boundary condition. For example, in the case of DOT week codes, the boundary condition may be that the piece of information is either the preceding week or the subsequent week following the preceding week. Hence, having the boundary condition (e.g. that the further information that the piece of information can be only one of the two alternative DOT week codes) facilitates determination of the piece of information and/or increases the likelihood of correctness for the determined piece of information.

According to an embodiment, the tire marking device 100 comprises a positioning device 121 for positioning the tire 114 and the writer device 112 relative to each other. The positioning device 121 may be of known type. For example, the positioning device 121 the may include a transport device, e.g. a conveyor, for transporting the tire 114 into a marking position 122 in which the tire 114 can be treated by the writer device 112 to thereby transfer the first representation 108 of the piece of information 106 to the tire 114. According to an embodiment, the positioning device 121 (e.g. the transport device and/or an actuator for positioning with respect to each other a part of a surface of the tire and a laser beam path of a laser device (laser treatment device)) is configured as described in European patent application No. 16 161 235.3. (attorney ref. J 1142) or European patent application No. 15 186 739.7-1706 (attorney ref. J 1128) the entire contents of both of which is included herein by reference.

The encoder 102 may be part of a controller 123 of the tire marking device. According to an embodiment, the controller 123 controls one or more entities of the tire marking device 100, e.g. the reader device 118, the writer device 112, the positioning device 121, the encoder 102, etc.

Fig. 2 shows a further tire marking device 200 according to embodiments of the herein disclosed subject matter.

In accordance with an embodiment, the second representation 120 of the piece of information 106 is provided to the tire 114 by the tire marking device 200. According to an embodiment, the tire marking device 200 comprises the encoder 102 and further includes a further encoder 124. According to an embodiment, the encoder 124 is configured for receiving the piece of information 106 at the input 104 thereof and for providing in response hereto the first representation 108 of the piece of information 106 at an output 127 thereof. According to a further embodiment, the further encoder 124 is configured for receiving the piece of information 106 at an input 126 thereof and provide, in response hereto, the second representation 120 at an output 129 thereof. For example, according to an embodiment the second representation 120 may be provided by the further encoder 124 in the form of a respective electrical signal 128.

As mentioned with regard to Fig. 1, according to an embodiment the encoder 102 is communicatively coupled with the writer device 112. According to an embodiment, the writer device 112 is configured for transferring the received first representation 120 to the tire 114, e.g. by means of a laser beam 116.

According to a further embodiment, the further encoder 124 is communicatively coupled with the writer device 112. According to an embodiment, the writer device 112 is configured for transferring the received second representation 120 to the tire 114, e.g. by means of a laser beam 116.

According to an embodiment, in particular when a single writer device 112 is provided, the first representation 108 of the piece of information 106 and the second representation 120 of the piece of information 106 are transferred to the tire 114 subsequently, i.e. one after another. After transferring the one of first and second representations, a repositioning of the writer device 112 and the tire 114 with respect to each other may be effected by the controller 123. According to another embodiment, e.g. if the writer device 112 is configured accordingly or a further writer device (not shown in Fig. 2) is provided, the first representation 108 and the second representation 120 of the piece of information 106 may be transferred to the tire 114 simultaneously.

According to an embodiment, the tire marking device 200 comprises a controller 123 for controlling the operation of the tire marking device 200 in accordance with embodiments of the herein disclosed subject matter. According to an embodiment, the controller 123 comprises a processor device 130 which is configured for executing one or more program elements, for example a program element according to embodiments of the herein disclosed subject matter. According to an embodiment, one or more of the entities of the tire marking device are implemented in software, e.g. in the form of respective program entities. For example, the encoder 102 and the further encoder 124 may be provided in the form of respective program entities being executed on the processor device 130 and thereby providing the functionality of one or more embodiments of the encoder 102 and the further encoder 124 as described herein.

According to an embodiment, the input 104 of the encoder 102 (and, optionally, the input 126 of the further encoder 124) is referred to as an input of the controller 123. According to a further embodiment, the output 127 of the encoder 102 (and, optionally, the output 129 of the further encoder 124) is referred to as an output of the controller 123.

Fig. 3 shows a tire 114 according to embodiments of the herein disclosed subject matter.

According to an embodiment, the tire 114 comprises a first representation 108 of a piece of information and a second representation 120 of the piece of information. Hence, the tire provides the piece of information redundantly. Those skilled in the art will recognize upon studying this application that providing the first representation 108 and the second representation 120 in a synchronized manner, i.e. such that the first representation and the second representation are different representations of the same piece of information, provides for an efficient use of the piece of information that is provided by the tire.

In accordance with an embodiment, the first representation is a digital representation of the piece of information and the second representation is a further representation of the piece of information. In accordance with a further embodiment, the first representation is different from the second representation.

In accordance with an embodiment, the piece of information is a DOT code or part of a DOT code, e.g. a part of the DOT code which identifies the week of manufacture of the tire 114.

For example, in accordance with present legal provisions the DOT code includes four symbol groups:
1. the first two symbols, the plant code, identifies the tire manufacturer plant (pp in 120 of Fig. 3)
2. the next two symbols, identifies the size of the tire (ss in 120 of Fig. 3)
3. thereafter follows an optional, manufacturer specific code, the type code (tttt in 120 of Fig. 3)
4. the last four digits define the year of manufacture of the tire. The first two digits, the week code (ww in 120 of Fig. 3), define the calendar week, wherein the first calendar week is the week into which the first January falls. The third and, if present, the fourth digit (yy in 120 of Fig. 3) define the year of manufacture.

For example according to an embodiment the DOT code and in particular the part of the DOT code which identifies the week of manufacture is molded into the tire during manufacturing. Hence, in a chronological vicinity of the change of a mold stamp which identifies the week of manufacture in the DOT code there exists a time period where the DOT week code that is actually provided to the tires is difficult to determine at a later stage where the tires are provided with the first representation (e.g. the digital representation) of the piece of information (i.e. the DOT week code in one example), at least in a mass production. Even in such a situation embodiments of the herein disclosed subject matter provide a suitable solution, for example by reading the second representation of the DOT week code that is molded into the tire and use this DOT week code read from the tire for generating (encoding) the first representation of the DOT week code.

It should be understood, that instead of a DOT week code the entire DOT code or any other information provided on the tire by molding may be read from the tire and used for generating the first representation of the same information, and transferring this first representation to the tire, e.g. by means of laser engraving.

According to another solution provided herein and in accordance with respective embodiments of the herein disclosed subject matter, any information that shall be provided on the tire in human readable form may, according to an embodiment, be provided on the tire in both, the human readable form (second representation) and in digital form (first representation) by laser engraving the second representation and the first representation on the tire, thereby providing a synchronized first representation and second representation of the respective piece of information on the tire.

It should be noted that any entity disclosed herein (e.g. any component, unit or device) is not limited to a dedicated entity as described in some embodiments. Rather, the herein disclosed subject matter may be implemented in various ways and with various granularity on device level or software module level while still providing the specified functionality. Further, it should be noted that according to embodiments a separate entity (e.g. a software module, a hardware module or a hybrid module (combined software/hardware module)) may be provided for each of the functions disclosed herein. According to other embodiments, an entity (e.g. a software module, a hardware module or a hybrid module) is configured for providing two or more functions as disclosed herein. According to still other embodiments, two or more entities are configured for providing together a function as disclosed herein.

According to an embodiment, the control device comprises at least one processor device for carrying out at least one computer program or program element corresponding to a respective software module.

Further, although some embodiments refer to a DOT week code, etc., it should be understood that each of these references is considered to implicitly disclose a respective reference to the general term "DOT code" or even "human readable information". Also other terms which relate to specific standards or specific techniques are considered to implicitly disclose the respective general term with the specified functionality.

Further, it should be noted that while the exemplary tire marking device or tire in the drawings includes a particular combination of several embodiments of the herein disclosed subject matter, any other combination of embodiment is also possible and is considered to be disclosed with this application and hence the scope of the herein disclosed subject matter extends to all alternative combinations of two or more of the individual features mentioned or evident from the text. All of these different combinations constitute various alternative aspects of the invention.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate some of the above described embodiments of the present invention one can state:
A method of providing a tire 114 with different representations 108, 120 of a piece of information 106 comprises synchronizing a digital representation 108 of the piece of information and a further representation 120 of the piece of information such that the digital representation and the further representation represent the same piece of information 106. Synchronizing may include reading the piece of information from the further representation 120 already provided on the tire 114, generating the digital representation 108 of the piece of information and transferring the digital representation to the tire 114, e.g. by laser engraving. Further, synchronizing may include receiving the piece of information 106, generating the digital representation 108 and the further representation 120 from the received piece of information 106 and transferring both representations 108, 120 to the tire 114 e.g. by laser engraving.

## Claims

1. A method of providing a tire (114) with different representations (108, 120) of a piece of information (106), the method comprising:
synchronizing a first representation (108) of the piece of information (106) and a second representation (120) of the piece of information (106) such that the first representation (108) and the second representation (120) represent the same piece of information (106); and
transferring the first representation (108) to the tire (114);
wherein the first representation (108) is at least part of an optically readable digital code pattern;
wherein transferring the first representation (108) to the tire (114) includes generating the optically readable digital code pattern in a surface of the tire (114); and
wherein generating the digital code in the surface of the tire (114) includes generating the digital code pattern by laser treatment of the surface of the tire (114).

2. The method according to claim 1, wherein
the tire (114) already includes the second representation (120); and
synchronizing the first representation (108) with the second representation (120) includes:
reading the piece of information (106) from the second representation (120);
encoding the piece of information (106) read from the second representation (120) to thereby generate the first representation (108).

3. The method according to claim 1, wherein
synchronizing the first representation (108) with the second representation (120) includes:
receiving the piece of information (106);
generating the first representation (108) from the received piece of information (106);
generating the second representation (120) from the received piece of information (106);
transferring the second representation (120) to the tire (114).

4. The method of claim 3 wherein
the first representation (108) is a digital representation of the piece of information (106) and the second representation (120) is a further representation of the piece of information (106); and/or
transferring the second representation (120) to the tire (114) includes generating the second representation (120) in a surface of the tire (114) by laser treatment of the surface of the tire (114).

5. The method according to any one of claims 1 to 4, wherein the second representation (120) is at least one of the following:
a non-digital representation (108) of the piece of information (106);
an optically readable representation of the piece of information (106);
a machine readable representation of the piece of information (106);
a human readable representation of the piece of information (106);
data stored in an electronic storage element.

6. The method according to any one of claims 1 to 5, wherein the piece of information (106) is at least part of a DOT code of the tire (114), in particular a part of the DOT code that provides a week of manufacture of the tire (114).

7. Tire (114), the tire comprising
a first representation (108) of a piece of information (106); and
a second representation (120) of the piece of information (106);
wherein the first representation (108) is at least part of an optically readable digital code pattern generated after vulcanization of the tire (114), in particular by laser treatment of the tire (114).

8. The tire (114) according to claim 7, wherein
the second representation (120) is an optically readable representation generated after vulcanization of the tire (114), in particular by laser treatment of the tire.

9. The tire (114) according to any one of claims 7 or 8, wherein
the piece of information (106) is least part of a DOT code of the tire (114), in particular a part of the DOT code that provides a week of manufacture of the tire (114).

10. A tire marking device (100, 200), the tire marking device being configured for carrying out the method according to any one of claims 1 to 6.

11. A controller (123) of a tire marking device (100, 200), the controller being configured for carrying out the method according to any one of claims 1 to 6.

12. A computer program product comprising a program element which is configured for, when executed on a processor device (130), carrying out the method according to any one of claims 1 to 6.

## Patentansprüche

1. Verfahren zum Versehen eines Reifens (114) mit verschiedenen Darstellungen (108, 120) eines Stücks an Information (106), wobei das Verfahren umfasst:
Synchronisieren einer ersten Darstellung (108) des Stücks an Information (106) und einer zweiten Darstellung (120) des Stücks an Information (106), so dass die erste Darstellung (108) und die zweite Darstellung (120) das gleiche Stück an Information (106) repräsentieren; und
Übertragung der ersten Darstellung (108) auf den Reifen (114);
wobei die erste Darstellung (108) zumindest Teil eines optisch lesbaren digitalen Codemusters ist;
wobei das Übertragen der ersten Darstellung (108) auf den Reifen (114) ein Erzeugen des optisch lesbaren digitalen Codemusters in einer Oberfläche des Reifens (114) umfasst; und
wobei das Erzeugen des digitalen Codes in der Oberfläche des Reifens (114) ein Erzeugen des digitalen Codemusters durch Laserbehandlung der Oberfläche des Reifens (114) umfasst.

2. Verfahren nach Anspruch 1, wobei
der Reifen (114) bereits die zweite Darstellung (120) aufweist; und
das Synchronisieren der ersten Darstellung (108) mit der zweiten Darstellung (120) aufweist:
Lesen des Stücks an Information (106) aus der zweiten Darstellung (120);
Codieren des aus der zweiten Darstellung (120) gelesenen Stücks an Information (106), um dadurch die erste Darstellung (108) zu erzeugen.

3. Verfahren nach Anspruch 1, wobei
das Synchronisieren der ersten Darstellung (108) mit der zweiten Darstellung (120) umfasst:
Empfangen des Stücks an Information (106);
Erzeugen der ersten Darstellung (108) aus dem empfangenen Stück an Information (106);
Erzeugen der zweiten Darstellung (120) aus dem empfangenen Stück an Information (106);
Übertragung der zweiten Darstellung (120) auf den Reifen (114).

4. Das Verfahren nach Anspruch 3, wobei
die erste Darstellung (108) eine digitale Darstellung des Stücks an Information (106) ist und die zweite Darstellung (120) eine weitere Darstellung des Stücks an Information (106) ist; und/oder
das Übertragen der zweiten Darstellung (120) auf den Reifen (114) ein Erzeugen der zweiten Darstellung (120) in einer Oberfläche des Reifens (114) durch Laserbehandlung der Oberfläche des Reifens (114) umfasst.

5. Die Methode nach einem der Ansprüche 1 bis 4, wobei die zweite Darstellung (120) mindestens eine der folgenden ist:
eine nicht-digitale Darstellung (108) des Stücks an Information (106);
eine optisch lesbare Darstellung des Stücks an Information (106);
eine maschinenlesbare Darstellung des Stücks an Information (106);
eine von Menschen lesbare Darstellung des Stücks an Information (106);
Daten, die in einem elektronischen Speicherelement gespeichert sind.

6. Verfahren nach einem der Ansprüche 1 bis 5, wobei das Stück an Information (106) zumindest Teil eines DOT-Codes des Reifens (114) ist, insbesondere ein Teil des DOT-Codes, der eine Woche der Herstellung des Reifens (114) liefert.

7. Reifen (114), wobei der Reifen umfasst
eine erste Darstellung (108) eines Stücks an Information (106); und
eine zweite Darstellung (120) des Stücks an Information (106);
wobei die erste Darstellung (108) zumindest ein Teil eines optisch lesbaren digitalen Codemusters ist, das nach der Vulkanisierung des Reifens (114), insbesondere durch Laserbehandlung des Reifens (114), erzeugt wurde.

8. Der Reifen (114) nach Anspruch 7, wobei
die zweite Darstellung (120) eine optisch lesbare Darstellung ist, die nach der Vulkanisation des Reifens (114), insbesondere durch Laserbehandlung des Reifens, erzeugt wurde.

9. Der Reifen (114) nach einem der Ansprüche 7 oder 8, wobei
das Stück an Information (106) wenigstens ein Teil eines DOT-Codes des Reifens (114) ist, insbesondere ein Teil des DOT-Codes, der eine Woche der Herstellung des Reifens (114) liefert.

10. Eine Reifenmarkierungsvorrichtung (100, 200), wobei die Reifenmarkierungsvorrichtung zur Durchführung des Verfahrens nach einem der Ansprüche 1 bis 6 konfiguriert ist.

11. Eine Steuerung (123) einer Reifenmarkierungsvorrichtung (100, 200), wobei die Steuerung so konfiguriert ist, dass sie das Verfahren nach einem der Ansprüche 1 bis 6 ausführt.

12. Computerprogrammprodukt mit einem Programmelement, das so konfiguriert ist, dass es, wenn es auf einer Prozessorvorrichtung (130) ausgeführt wird, das Verfahren nach einem der Ansprüche 1 bis 6 ausführt.

## Revendications

1. Procédé de fourniture d'un pneumatique (114) avec différentes représentations (108, 120) d'un élément d'information (106), le procédé comprenant :
la synchronisation d'une première représentation (108) de l'élément d'information (106) et d'une seconde représentation (120) de l'élément d'information (106) de sorte que la première représentation (108) et la seconde représentation (120) représentent le même élément d'information (106) ; et
le transfert de la première représentation (108) au pneumatique (114) ;
dans lequel la première représentation (108) est au moins une partie d'un motif de code numérique lisible optiquement ;
dans lequel le transfert de la première représentation (108) au pneumatique (114) inclut la génération du motif de code numérique lisible optiquement dans une surface du pneumatique (114) ; et
dans lequel la génération du code numérique dans la surface du pneumatique (114) inclut la génération du motif de code numérique par traitement laser de la surface du pneumatique (114).

2. Procédé selon la revendication 1, dans lequel
le pneumatique (114) inclut déjà la seconde représentation (120) ; et
la synchronisation de la première représentation (108) avec la seconde représentation (120) inclut :
la lecture de l'élément d'information (106) à partir de la seconde représentation (120) ;
le codage de l'élément d'information (106) lu à partir de la seconde représentation (120) pour générer de ce fait la première représentation (108).

3. Procédé selon la revendication 1, dans lequel la synchronisation de la première représentation (108) avec la seconde représentation (120) inclut :
la réception de l'élément d'information (106) ;
la génération de la première représentation (108) à partir de l'élément d'information (106) reçu ;
la génération de la seconde représentation (120) à partir de l'élément d'information (106) reçu ;
le transfert de la seconde représentation (120) au pneumatique (114).

4. Procédé selon la revendication 3, dans lequel
la première représentation (108) est une représentation numérique de l'élément d'information (106) et la seconde représentation (120) est une autre représentation de l'élément d'information (106) ; et/ou
le transfert de la seconde représentation (120) au pneumatique (114) inclut la génération de la seconde représentation (120) dans une surface du pneumatique (114) par traitement laser de la surface du pneumatique (114).

5. Procédé selon l'une quelconque des revendications 1 à 4, dans lequel la seconde représentation (120) est au moins l'une de ce qui suit :
une représentation non numérique (108) de l'élément d'information (106) ;
une représentation lisible optiquement de l'élément d'information (106) ;
une représentation lisible par machine de l'élément d'information (106) ;
une représentation lisible par l'être humain de l'élément d'information (106) ;
des données mémorisées dans un élément de stockage électronique.

6. Procédé selon l'une quelconque des revendications 1 à 5, dans lequel l'élément d'information (106) est au moins une partie d'un code DOT du pneumatique (114), en particulier une partie du code DOT qui fournit une semaine de fabrication du pneumatique (114).

7. Pneumatique (114), le pneumatique comprenant
une première représentation (108) d'un élément d'information (106) ; et
une seconde représentation (120) de l'élément d'information (106) ;
dans lequel la première représentation (108) est au moins une partie d'un motif de code numérique lisible optiquement généré après vulcanisation du pneumatique (114), en particulier par traitement laser du pneumatique (114) .

8. Pneumatique (114) selon la revendication 7, dans lequel
la seconde représentation (120) est une représentation lisible optiquement générée après vulcanisation du pneumatique (114), en particulier par traitement laser du pneumatique.

9. Pneumatique (114) selon l'une quelconque des revendications 7 ou 8, dans lequel
l'élément d'information (106) est au moins une partie d'un code DOT du pneumatique (114), en particulier une partie du code DOT qui fournit une semaine de fabrication du pneumatique (114).

10. Dispositif de marquage de pneumatique (100, 200), le dispositif de marquage de pneumatique étant configuré pour réaliser le procédé selon l'une quelconque des revendications 1 à 6.

11. Organe de commande (123) d'un dispositif de marquage de pneumatique (100, 200), l'organe de commande étant configuré pour réaliser le procédé selon l'une quelconque des revendications 1 à 6.

12. Produit de programme informatique comprenant un élément de programme qui est configuré pour, lorsqu'il est exécuté sur un dispositif de processeur (130), réaliser le procédé selon l'une quelconque des revendications 1 à 6.
